# EUROPEAN PATENT APPLICATION

(11) **EP 2 213 871 A1**
(43) Date of publication of application: **04.08.2010**
(21) Application number: 09100093.5
(22) Date of filing: 03.02.2009
(51) Int. Cl.: F02P 5/152, F02D 41/24

(54) **A device and a method for knock control in a combustion engine**

(71) Applicant: ROBERT BOSCH GMBH, 70442 Stuttgart (DE)
(72) Inventor: Wild, Ernst, 71739 Oberriexingen (DE)

(57) **Abstract**

The invention relates to a device (10) and a method to control knock in the combustion engine (18). The knock control device (10) receives a knock sensor signal (14) and computes a short term knock correction (20). A first map (24) containing maximum knock sensitive characteristics and a second map (26) containing knock free operations data are used with correction factors to derive a final ignition angle (22). The final ignition angle (22) represents the ignition angle used to ignite the air and fuel in the combustion engine, for eliminating the knock in the combustion engine. The factor used for the correction of the data from the maps, is stored in EEPROM.

## Description

### State of the Art

The invention relates to a knock control device for a combustion engine.

The US 5,243,942 discloses one such knock control device where a static map is used to adjust the ignition angle for the combustion engine. The map contains the ignition angles for different operating conditions of the combustion engine and used whenever a knock occurs in the combustion engine.

The US 6,745,749 B2 discloses a knock control device where an adaptation map is used, the map containing adaptable parts. The map is continuously updated and stored in EEPROM so that after switching off and switching on the engine, the stored map is used for next cycle.

### Advantages of the invention

The knock control device and the method of controlling the knock, with the features of the independent patent claims have the below advantages:
The usage of two maps, one representing the ignition angles for knock free operation of the combustion engine and the other map representing ignition angles derived from a maximum knock sensitive fuel used for the combustion engine to operate it under knock conditions, will make the long term knock correction faster. This is because the current operating condition of the combustion engine may lie some where in between the first map and the second map. The two maps along with correction factors are used to arrive at more accurate long term knock correction.

Further improvements and/or advantages are realised by the features of the dependent patent claims.

Storing the two maps which need more space, in ROM and storing only the correction factor in EEPROM will reduce the cost of the knock control device as the ROM costs are lesser compared to EEPROM costs.

The maps are derived during the application phase of the combustion engine which is a known process, without needing any special process or equipments.

The adaptation means in the invention comprises simple integrator and computation components which are readily available, without needing any special components.

By providing a bigger positive input to the integrator whenever a knock occurs, the retarding of the ignition angle is achieved faster and very easily.

By providing a smaller negative input to the integrator whenever knock disappears, the advancing of the ignition angle is achieved easily in smaller steps to reduce the number of knocking events.

### Brief description of the drawings

The embodiments of the invention are shown in the drawing and are described in detail in the description.

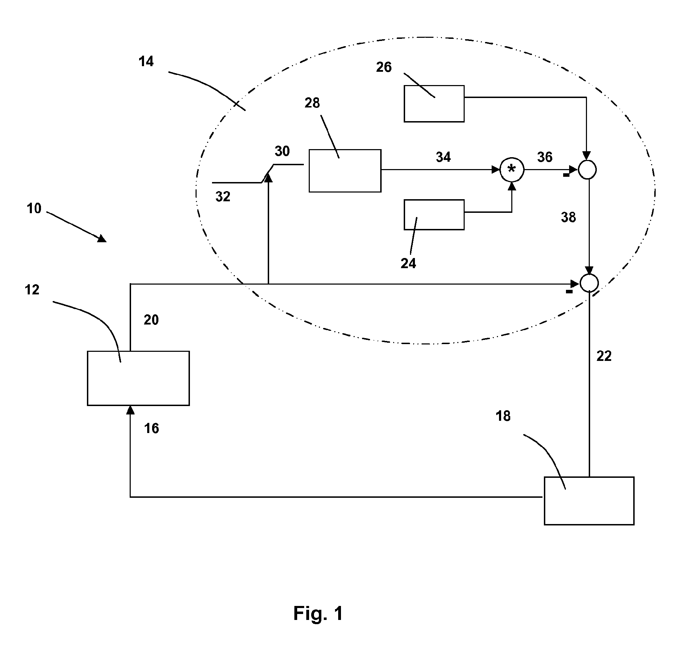

- Figure 1: shows a schematic of the invention.

### Description of the embodiments

Fig. 1 shows the schematic of the invention. Shown in fig. 1 is a knock control device 10 comprising a short term knock correction means 12 and a long term knock correction means 14. The short term correction means 12 receives a knock signal 16 from the combustion engine 18 through a knock sensor which is not shown in the figure and generates a short term knock correction 20. The short term correction means 12 further comprises an amplifier to amplify the knock signal 14 and an evaluation means which will evaluate the knock signal to find whether knock occurred or not in the engine. The internals of the short term correction means 12 are not shown in the figure. If the evaluation means detects that a knock has occurred in the combustion engine 18, the evaluation means generates a short term knock correction 16 based on the operating conditions of the engine 18 and delivers the short term knock correction 16 to the long term the long term correction means 14.

There are different methods in the prior arts to control the knock occurring in a combustion engine. The common principle used is, on sensing a knock in a cylinder of a combustion engine, the ignition timing with respect to a crank shaft position, referred as ignition angle, is retarded. Knocking is eliminated in this way. After a certain period of time, the ignition angle is reset in the direction of "advance". The retarding of the ignition angle is done in relatively bigger step compared to the advancing, because the knock has to be eliminated immediately otherwise the continuation of the knock may damage the combustion engine. The advancing of the ignition angle is undertaken in smaller steps until knocking reoccurs or a preset value of the ignition angle is reached without any occurrence of the knocking.

A static map containing ignition angles for different operating conditions of the engine, for example, different loads and engine speeds, is used to adjust the injection timing whenever a knock occurs in the engine. An adaptation map is used to adjust the injection timing and also to store the corrected ignition angles in the map for use in the subsequent cycles. The map is subdivided into ranges covering different loads and different engine speeds. For each range, the value of ignition angle retardation is stored and is continuously updated when the engine is operating in the range. When the current range is left and a new range is entered, the retardation value which was used for that range in the previous operation is used initially and again updated based on the engine operations. The static map is stored in ROM and the adaptation map is stored in nonvolatile ROM so that the values are retained after the engine is switched off. When the engine is switched on, the value from EEPROM for the last cycle in the range is used for knock control.

The adaptation maps in the prior art need to be stored in the EEPROM which will increase the cost of the knock control device. The invention proposes a device and a method where the knock control device generates a short term knock correction which will be used to generate a long term correction. The long term correction is derived from the static map by applying correction factors to it. According to the invention only the correction factor needs to be stored in EEPROM reducing the cost of the knock control device.
Shown in fig. 1 is a long term correction means 14 receiving the short term knock correction 20 and generating a final ignition angle 22 by using a first map 24 and a second map 26 and applying corrections to the first map 24 and the second map 26.

The long term correction means 14 comprises an integrator 28. The integrator has two inputs, a first level 30 and a second level 32. The short term knock correction 20 is zero when there is no knock in the combustion engine and it is a number by which the ignition angle is to be retarded when a knock is detected in the combustion engine 18. A non zero value of the short term knock correction 20 selects a first level 30 as input to the integrator 28 and a zero on the short term knock correction 20 selects a second level 32 as input to the integrator 28. The first level 30 is selected in such away that it is bigger than the second level 32, for example first level may be 0.1 and second level may be - 0.01. This is to ensure that the retarding is done faster and the advancing is done in small steps. Based on the input the integrator 28 generates an integrated output 34. The integrated output 34 is used as multiplying factor for an applicable data element from the first map 24 to arrive at a long term correction 36. The data element from the second map 26 is summed with the long term correction 36 to generate an intermediate ignition angle 38. The intermediate ignition angle 38 is summed with the short term knock correction 20 to arrive at the final ignition angle 22. The final ignition angle 22 represents an ignition angle to ignite the fuel and air mixture in the combustion engine 18.

The working is explained with example for better understanding.

When the engine is running knock free, the short term knock correction 20 is zero. The input to the integrator 28 is selected as 0.01 for example. We assume the output of the integrator is 0.01 ignoring the previous value. Based on the engine operating conditions, an ignition angle is read form the first map 24 which contains ignition angles for maximum knock sensitive characteristics. Assume the angle is 16 degrees, for example. The 16 is multiplied by 0.01 to get the first correction factor 0.16. An ignition angle is read from the second map 26 for the same engine operating conditions which contains the ignition angles for knock free operation. Assume the angle is 20 degrees, for example. Now the first correction 0.16 is reduced from the second map ignition angle to arrive at the second correction (20-0.16). The short term knock correction 20 which is zero is reduced from the second correction to arrive at the long term knock correction. It is observed that because the advancing step is 0.01, the advance happens in a smaller step. The advancing may happen by 1 degree after many cycles because of the small advancing step.

### Example for a knocking condition

When the combustion engine 18 is running and a knock is detected, the short term knock correction is non zero, say for example 3 degrees. The input to integrator 28 is selected as 0.1 as an example. We assume the output of the integrator is 0.1 ignoring the previous value. Based on the engine operating conditions, an ignition angle is read form the first map 24 which contains ignition angles for maximum knock sensitive characteristics. Assume the angle is 15 degrees, for example. The 15 is multiplied by 0.1 to get the first correction factor 1.5. An ignition angle is read from the second map 26 for the same engine operating conditions which contains the ignition angles for knock free operation. Assume the angle is 20 degrees, for example. Now the first correction 1.5 is reduced from the second map ignition angle to arrive at the second correction 18.5. The short term correction 3 is reduced from the second correction 18.5 to arrive at the long term knock correction 15.5. If we had only a static map represented by second map, the long term correction would be 17 degrees i.e. map data reduced by short term correction. By using a second map and an adaptation means the knock control device is able to arrive at a more accurate long term correction.

When the knock disappears, the knock control device slowly resets the ignition angle to previous value which was existing before knock occurred, but in smaller steps.

Using a first map, a second map, which are stored in ROM and other computational components, the knock control device arrives at the final ignition angle 22 which is dynamically computed and which is faster. When the engine is switched off, the knock control device needs to store only the integrator output i.e. the first correction 34 into the EEPROM for using it next time when the engine is again switched on. Storing only the integrator output in the EEPROM will result in reduced cost without compromising the accuracy in computing the final ignition angle 22 under dynamic conditions.

Also as the two maps 24 and 26 are available for two extreme conditions of the combustion engine, the first map 24 with the knock free operations and the second map 26 with most knock sensitive data, the dynamic computation of the long term correction is more accurate and faster. The retarding step and the advancing steps of the knock control device are easily controlled by changing the first level and second level which are used as inputs to the integrator.

As the first map 24 represents knock free data or the best cased data for the combustion engine and the map 26 represents the most knock sensitive data or the worst case knock data for the combustion engine, applying correction factors to these two maps and using the corrected values to compute the final ignition angle 22 results in more accurate knock control for the dynamic conditions of the engine. The correction factors will take care of the conditions which lie in between the best operating conditions and the worst operating conditions.

The detailed description and disclosure has been made with the embodiments of the present invention which has been described above. However the present invention is not limited to the description of the embodiments. Variations and modifications of the present invention may be apparent to the persons skilled in the art without departing from the spirit of the present invention as defined in claims.

## Claims

1. A knock control device (10) for a combustion engine (18) comprising a short term knock correction means (12) adapted to receive a knock sensor signal 16 to generate a short term knock correction (20), **characterised by** a first map (24) indicative of maximum knock sensitive characteristics, a second map (26) indicative of knock free operations of the combustion engine, a long term knock correction means (14) receiving the short term knock correction (20) and generating a final ignition angle (22) based on the short term knock correction (20), the first map (24) and the second map (26) along with a long term correction (36) and an intermediate ignition angle (38).

2. A knock control device (10) according to claim 1 wherein the first map (24) represents the ignition angles of the combustion engine (18) for knock free operations for different operating conditions of the combustion engine (18).

3. A knock control device (10) according to claim 1 wherein the first map (24) is computed during application phase of the combustion engine (18) by testing the combustion engine (18) under knock free operations.

4. A knock control device (10) according to claim 1 wherein the second map (26) represents the ignition angles of the combustion engine (11) for a fuel having maximum sensitivity to the knocking of the combustion engine (18).

5. A knock control device (10) according to claim 1 wherein the second map (26) is computed during application phase of the combustion engine (18) by testing the combustion engine (18) with a fuel having maximum knock sensitive characteristics under the conditions of knocking.

6. A knock control device (10) according to claim 1 wherein the first map (24) and the second map (26) are stored in ROM of the knock control device (10).

7. A knock control device (10) according to claim 1 wherein the long term knock correction means (14) further comprises an integrator (28) and a computation means.

8. A knock control device (10) according to claims 1 and 7 wherein the input to integrator (28) is switched to a first level (30) whenever the short term knock correction (20) is non zero.

9. A knock control device (10) according to claims 1 and 7 wherein the input to integrator (28) is switched to second level (32) whenever the short term knock correction (20) is zero.

10. A knock control device (10) according to claims 1 and 8 wherein the first level (30) is indicative of a retarding ignition angle.

11. A knock control device (10) according to claims 1 and 9 wherein the second level (32) is indicative of an advancing ignition angle.

12. A knock control device (10) according to claims 1, 8 and 9 wherein the first level (30) is bigger compared to second level (32) indicating retarding of ignition angle is done in bigger steps and advancing of ignition angle is done in smaller steps.

13. A knock control device (10) according to claim 1 and 7 wherein the integrator (28) delivers to the computation means a multiplication factor (34) which is an integrated value of the inputs to integrator (28).

14. A knock control device 10 according to claim 1 and (13) wherein the multiplication factor (34) is stored in EEPROM of the knock control device before the engine is switched off.

15. A knock control device (10) according to claim 1 and 13 wherein the multiplication factor (34) from the EEPROM is used when the engine is switched on for the first time.

16. A knock control device (10) according to claim 1 and 13 wherein the computation means reads the ignition angle from the first map (24) based on the engine operating conditions and multiplying it with the multiplication factor (34) arrives at a long term correction (36).

17. A knock control device (10) according to claim 1 and 16 wherein the computation means reads the ignition angle from the second map (26) based on the engine operating conditions and summing it with the long term correction (36) generates an intermediate ignition angle (38).

18. A knock control device (10) according to claim 1 and 17 wherein the computation means generates the final ignition angle (22) by summing the short term knock correction (20) and the intermediate ignition angle (38).

19. A knock control device (10) according to claim 1 and (18) wherein the final ignition angle (22) is indicative of the ignition angle to be used in subsequent cycle.

20. A method to control knock in a combustion engine, the said method comprising the steps:
- detecting whether a knock occurred in the combustion engine and generating a short term knock correction (20)
- using an integrator (28) and incrementing it by a first level (30) if the short term knock correction is non zero and decrementing by a second level (32) if the short term knock correction (20) is zero
- generating a long term correction (36) by multiplying the integrator output and the data from first map (24)
- generating an intermediate ignition angle(38) by summing data from second map (26) and the long term correction (36)
- generating the final ignition angle (22) by summing the short term knock correction (20) and the intermediate ignition angle (38)
- using the final ignition angle (22) as the ignition angle for the combustion engine (18).
